# EUROPÄISCHE PATENTSCHRIFT

(11) **EP 4 003 760 B1**
(45) Veröffentlichungstag und Bekanntmachung des Hinweises auf die Patenterteilung: **03.01.2024**
(21) Anmeldenummer: 20733945.8
(22) Anmeldetag: 17.06.2020
(51) Int. Cl.: B60C 11/03, B60C 11/12

(54) **FAHRZEUGLUFTREIFEN**
PNEUMATIC VEHICLE TYRE
PNEUMATIQUE DE VÉHICULE

(30) Priorität: 25.07.2019 DE 102019211025
(43) Veröffentlichungstag der Anmeldung: 01.06.2022
(73) Patentinhaber: Continental Reifen Deutschland GmbH, 30165 Hannover (DE)
(72) Erfinder: PANG-JIAN-XIANG, Edwin, 30419 Hannover (DE); GLEESON, Ruaidhri, 30419 Hannover (DE); BAUER, Claudia, 30419 Hannover (DE)
(74) Vertreter: Continental Corporation
(86) Internationale Anmeldenummer: PCT/EP2020/066837
(87) Internationale Veröffentlichungsnummer: WO 2021/013440

(56) Entgegenhaltungen:
- EP-A1- 0 698 512
- EP-A1- 1 529 662
- EP-A1- 2 159 080
- EP-A1- 2 432 652
- DE-A1- 19 711 852
- DE-A1-102005 058 365
- DE-A1-102010 008 261
- DE-A1-102017 212 710
- JP-A- S63 137 003
- JP-A- 2000 025 419
- JP-A- 2002 103 921
- JP-A- 2007 131 059

## Beschreibung

### Fahrzeugluftreifen

Die Erfindung betrifft einen Fahrzeugluftreifen mit einem Laufstreifen mit zumindest einer schulterseitigen Profilblockreihe mit Profilblöcken, welche durch parallel zueinander verlaufende Querrillen getrennt und mit sich insbesondere parallel zu den Querrillen erstreckenden, Einschnittwände aufweisenden Einschnitten versehen sind, wobei die Einschnitte, in Draufsicht betrachtet, über drei Einschnittzonen verlaufen, von welchen eine einem zumindest Großteils außerhalb der Bodenaufstandsfläche befindlichen schulterseitigen, eine einem mittleren und eine einem laufstreifeninnenseitigen, in Umfangsrichtung umlaufenden Profilblockreihenabschnitt der Profilblockreihe zugeordnet ist, wobei die Tiefe der Einschnitte und die Gestaltung der Einschnittwände in jeder Einschnittzone von der Tiefe der Einschnitte und der Gestaltung der Einschnittwände in den beiden anderen Einschnittzonen abweicht, derart, dass die laterale Steifigkeit der schulterseitigen Profilblockreihe vom schulterseitigen Profilblockreihenabschnitt zum laufstreifeninnenseitigen Profilblockreihenabschnitt abnimmt.

Ein Fahrzeugluftreifen der eingangs genannten Art ist beispielsweise aus der EP 1 529 662 A1 bekannt. Gemäß einem offenbarten Ausführungsbeispiel weist der Laufstreifen eine von einer Umfangsrille begrenzte, schulterseitige Profilblockreihe mit schulterseitigen Profilblöcken mit in Draufsicht parallel zueinander sowie jeweils wellenförmig verlaufenden Einschnitten auf. Die Amplitude der Wellenform, insbesondere zusätzlich auch die Wellenlänge der Wellenform, nimmt in Richtung zur Umfangsrille zu, wobei die Zunahme schrittweise erfolgen kann, sodass der Einschnitt die laterale Steifigkeit der schulterseitigen Profilblockreihe entsprechend beeinflussende Einschnittzonen aufweist. Die Wellenform des Einschnittes weist dabei mindestens zwei unterschiedlich große Amplituden auf, wobei beim Ausführungsbeispiel drei unterschiedlich große Amplituden vorgesehen sind. Die Einschnitte versteifen den Laufstreifen beim Einwirken von Querkräften und verbessern die Handlingeigenschaften.

Die DE 10 2005 058 365 A1 offenbart einen Fahrzeugluftreifen mit einem Laufstreifen mit Profilblöcken, in welchen in Draufsicht sinusförmig verlaufende Einschnitte ausgebildet sind, wobei die Wellenform eine progressiv zunehmende Amplitude aufweist. Die Einschnitte stellen lange Kanten an der Laufstreifenperipherie zur Verfügung, wobei eine hohe Steifigkeit der Profilblöcke und ein guter Griff auf weichem Untergrund gegeben sein soll.

Aus der EP 2 432 652 B1 ist einen Fahrzeugluftreifen mit einem Laufstreifen mit einem zentralen Laufstreifenband und zwei schulterseitigen Profilblockreihen bekannt. Im zentralen Laufstreifenband sind in Umfangsrichtung wellenförmig umlaufende, schmale Nuten ausgebildet, wodurch der Reifen ausgeglichene Handlingeigenschaften auf verschneiter, nasser und trockener Fahrbahn aufweisen soll.

Die EP 0 698 512 A1 offenbart einen Fahrzeugluftreifen mit einem Laufstreifen mit in Draufsicht liegend S-förmig über die Laufstreifenbreite verlaufenden Querrillen, welche im Bereich des Reifenzenits durch in Umfangsrichtung aufeinanderfolgende Profilblöcke unterbrochen sind. Zwischen in Umfangsrichtung aufeinanderfolgenden Querrillen verlaufen weitere Rillen. Die Querrillen sollen das Aquaplaningverhalten ohne Verschlechterung des Reifen-Fahrbahn-Geräusches verbessern.

Die DE 10 2017 212 710 A1 offenbart einen Fahrzeugluftreifen mit einem Laufstreifen mit schulterseitigen Profilblöcken mit Einschnitten, welche zumindest über den Großteil ihrer Erstreckung in der Gestalt von aneinander anschließenden, abwechselnd in die eine und in die andere Umfangsrichtung weisenden, basislosen gleichschenkeligen Trapezen verlaufen. Die Einschnitte setzen sich, im Querschnitt betrachtet, aus einem gerade verlaufenden, radial äußeren Einschnittabschnitt, einem bogenförmig verlaufenden, mittleren Einschnittabschnitt und einem gerade und fluchtend mit dem radial äußeren Einschnittabschnitt verlaufenden, radial inneren Einschnittabschnitt zusammen. Die Einschnitte sollen die Griffeigenschaften sowohl beim Auftreten von Querkräften als auch beim Auftreten von Umfangskräften verbessern.

Aus der DE 10 2015 224 288 A1 ist ein Fahrzeugluftreifen mit einem Laufstreifen mit einer schulterseitige Profilblockreihen mit durch Querrillen voneinander getrennten Profilblöcken bekannt. In den schulterseitigen Profilblöcken sind parallel zu den Querrillen verlaufende Einschnitte ausgebildet. Die Einschnitte weisen jeweils eine im mittleren Profilblockreihenabschnitt ausgebildete Einschnittzone auf, in welcher der Einschnitt in Draufsicht wellenförmig verläuft. In den dem laufstreifeninnenseitigen und dem schulterseitigen Profilblockreihenabschnitt zugeordneten Einschnittzonen verläuft der Einschnitt in Draufsicht gerade.

In Laufstreifenprofilen von Fahrzeugluftreifen ausgebildete Einschnitte stellen an der Laufstreifenperipherie Griffkanten zur Verfügung und nehmen Einfluss auf die Steifigkeit sowie das Biegeverhalten der Profilpositive. Für gute Handlingeigenschaften auf trockner Fahrbahn ist es günstig, wenn die Einschnitte derart gestaltet sind, dass sie die Stabilität der schulterseitigen Profilblöcke möglichst wenig verringern. Solche Einschnitte öffnen sich tendenziell weniger und haben daher nicht die für eine optimale Winterperformance erwünschte Wirkung auf Schnee und Eis. Bei herkömmlich gestalteten Einschnitten in schulterseitigen Profilblöcken besteht daher ein Zielkonflikt zwischen der "Winterperformance" und den Handlingeigenschaften auf trockner Fahrbahn, welcher bisher noch nicht zufriedenstellend gelöst wurde.

Der Erfindung liegt daher die Aufgabe zugrunde, bei einem Fahrzeugluftreifen der eingangs genannten Art den bei schulterseitigen Profilblöcken bestehenden Zielkonflikt zwischen einer guten "Winterperformance" und guten Handlingeigenschaften auf trockener Fahrbahn besser als bisher zu lösen.

Gelöst wird die gestellte Aufgabe erfindungsgemäß dadurch, dass die Einschnitte in der dem laufstreifeninnenseitigen Profilblockreihenabschnitt zugeordneten Einschnittzone in Draufsicht zumindest abschnittsweise wellenförmig, in der dem mittleren Profilblockreihenabschnitt zugeordneten Einschnittzone in Draufsicht zickzackförmig, insbesondere sägezahnförmig, und in der dem schulterseitigen Profilblockreihenabschnitt zugeordneten Einschnittzone in Draufsicht gerade verlaufen, wobei die Einschnitte in den Einschnittzonen eine größte Tiefe aufweisen, welche vom laufstreifeninnenseitigen Profilblockreihenabschnitt über den mittleren Profilblockreihenabschnitt zum schulterseitigen Profilblockreihenabschnitt schrittweise abnimmt.

Durch die höhere Steifigkeit im schulterseitigen, Großteils außerhalb der Bodenaufstandsfläche befindlichen Profilblockreihenabschnitt ist für gute Handlingeigenschaften auf trockener Fahrbahn gesorgt. Im geringer steifen laufstreifeninnenseitigen Profilblockreihenabschnitt können sich die Einschnitte unter Traktions- und Bremsbelastung gut öffnen, wodurch beim Fahren auf Schnee und/oder Eis die Einschnittkanten wirkungsvoll in diesen bzw. dieses eingreifen können. Der mittlere Profilblockreihenabschnitt hat eine Übergangs- bzw. Ausgleichsfunktion und trägt zu einer ausbalancierten Wirkungsweise der Einschnitte bei. Durch die schrittweise abnehmende Tiefe lassen sich vor allem die Handlingeigenschaften positiv beeinflussen.

Weitere bevorzugte Ausführungsvarianten, welche sich mit der Lage bzw. der axialen Breite der Profilblockreihenabschnitte befassen, tragen zu einer besonders günstigen Lösung des erwähnten Zielkonfliktes bei.

Dabei ist es von Vorteil, wenn der schulterseitige Profilblockreihenabschnitt und der mittlere Profilblockreihenabschnitt an einer in Umfangsrichtung umlaufenden Linie aneinander anschließen, welche sich in axialer Richtung innerhalb eines Abstandes von bis zu 5,0 mm vom seitlichen Rand der Bodenaufstandsfläche befindet, wobei die Linie vorzugsweise innerhalb der Bodenaufstandsfläche liegt.

Es ist dabei ferner bevorzugt, wenn der laufstreifeninnenseitige Profilblockreihenabschnitt und der mittlere Profilblockreihenabschnitt an einer in Umfangsrichtung umlaufenden Linie aneinander anschließen, welche zur Linie, an welcher der schulterseitige Profilblockreihenabschnitt und der mittlere Profilblockreihenabschnitt aneinander anschließen, in axialer Richtung einen Abstand von 10,0 mm bis 15,0 mm aufweist.

Es ist besonders günstig, wenn die größte Tiefe der Einschnitte, ermittelt in der jeweiligen Einschnittzone, im laufstreifeninnenseitigen Profilblockreihenabschnitt um mindestens 1,5 mm geringer ist als die Profiltiefe, vom laufstreifeninnenseitigen Profilblockreihenabschnitt zum mittleren Profilblockreihenabschnitt um mindestens 1,5 mm und vom mittleren Profilblockreihenabschnitt zum schulterseitigen Profilblockreihenabschnitt um mindestens 2,0 abnimmt.

Gemäß einer weiteren bevorzugten Ausführung weisen die Einschnitte in der dem laufstreifeninnenseitigen Profilblockreihenabschnitt zugeordneten Einschnittzone an zumindest einer, insbesondere jeweils an einer einzigen, Einschnittwand zumindest einen, insbesondere genau einen, Vorsprung auf, welchem an der anderen Einschnittwand eine mit dem Vorsprung korrespondierend ausgebildete Vertiefung gegenüberliegt. Auch diese Maßnahme ist für eine Beeinflussung und Einstellung der lateralen Steifigkeit der Profilblockreihe in obigem Sinne gut geeignet.

Es ist dabei bevorzugt, wenn der Vorsprung bzw. die Vorsprünge gegenüber dem Niveau der jeweiligen Einschnittwand eine Stärke von 100% bis 230%, insbesondere von zumindest 110%, besonders bevorzugt von zumindest 180%, der Breite des Einschnittes aufweist bzw. aufweisen.

Ferner ist es bei dieser Ausführung günstig, wenn der Vorsprung bzw. die Vorsprünge, im Querschnitt des Einschnittes betrachtet, kreissegmentförmig ist bzw. sind, insbesondere die Form eines Kreiskegels oder eines Kugelsegments aufweist bzw. aufweisen.

Darüber hinaus ist es bei dieser Ausführung bevorzugt, wenn an den Einschnittwänden eine Vielzahl von Vorsprüngen mit zugehörigen korrespondieren Vertiefungen an der jeweils anderen Einschnittwand vorgesehen ist, wobei die Vorsprünge insbesondere in zumindest zwei, vorzugsweise zumindest drei unterschiedlichen Tiefen vorgesehen sind. Die Wirkungsweise der Vorsprünge und Vertiefungen bleibt derart zuverlässig über den Laufstreifenabrieb erhalten.

Gemäß einer weiteren bevorzugten Ausführung setzen sich die Einschnitte in der dem mittleren Profilblockreihenabschnitt zugeordneten Einschnittzone, im Querschnitt betrachtet, abwechselnd aus in radialer Richtung verlaufenden Einschnittabschnitten und quer zu diesen verlaufenden Einschnittabschnitten zusammen. Derartig ausgestaltete Einschnittzonen eigenen sich besonders gut für die erwähnte Übergangs- und Ausgleichsfunktion.

Gemäß einer weiteren bevorzugten Ausführung verlaufen die Einschnitte in der dem schulterseitigen Profilblockreihenabschnitt zugeordneten Einschnittzone, im Querschnitt betrachtet, in radialer Richtung zickzackförmig und setzen sich aus insbesondere vier bis sechs Einschnittabschnitten zusammen, welche zur radialen Richtung unter einem Winkel von vorzugsweise 15° bis 25° verlaufen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen schulterseitigen Ausschnitt eines Laufstreifens eines Fahrzeugluftreifens mit einer Ausführungsvariante der Erfindung,
Fig. 2 einen Schnitt entlang der Linie II-II der Fig. 1,
Fig. 3 einen Schnitt entlang der Linie III-III der Fig. 1,
Fig. 3a einen weiteren Schnitt, welcher eine Variante zur Fig. 3 ist,
Fig. 4 einen Schnitt entlang der Linie IV-IV der Fig. 1 und
Fig. 4a einen weiteren Schnitt, welcher eine Variante zur Fig. 4 ist.

Gemäß der Erfindung ausgeführte Fahrzeugluftreifen sind Reifen in Radialbauart, insbesondere für Personenkraftwagen, Vans oder Light-Trucks, wobei die Reifen zum Fahren unter winterlichen Fahrbedingungen besonders gut geeignet sind.

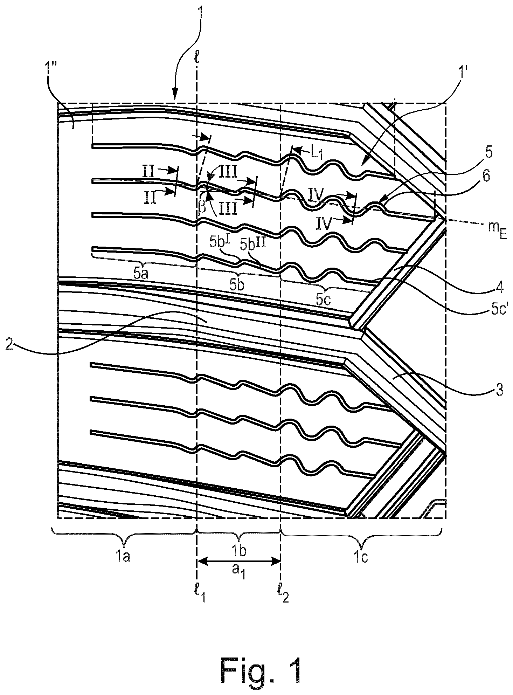

Fig. 1 zeigt eine Draufsicht auf zwei schulterseitige Profilblöcke 1' eines Laufstreifens eines Fahrzeugluftreifens, welche zu einer in Umfangsrichtung umlaufenden schulterseitigen Profilblockreihe 1 gehören. Der seitliche Rand der Bodenaufstandsfläche ist durch ein gestrichelte Linie 1 gekennzeichnet, wobei die Bodenaufstandsfläche dem statisch ermittelten Footprint entspricht (ermittelt mit einem auf einer Normfelge montierten Reifen, Last bei 70 % der maximalen Tragfähigkeit, Innendruck 85 % des Normdruckes, gemäß ETRTO-Standards).

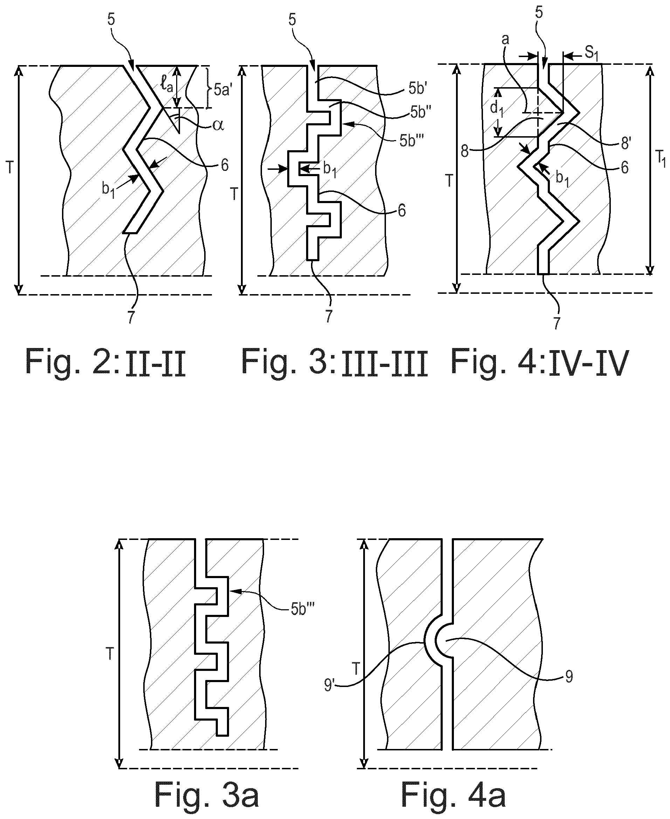

Die Profilblöcke 1' sind durch schulterseitige Querrillen 2 voneinander getrennt, welche, in Draufsicht betrachtet, gerade, parallel zueinander sowie zur axialen Richtung unter einem Winkel von 0° bis 35°, insbesondere von bis zu 20°, verlaufen. Beim gezeigten Ausführungsbeispiel sind die Profilblöcke 1 laufstreifeninnenseitig durch Endabschnitte von Schrägrillen 3, welche an die Querrillen 2 anschließen, und durch schmale, kurze Rillen 4, welche zwischen einer Querrille 2 und einer Schrägrille 3 verlaufen, begrenzt. Die kurzen Rillen 4 verlaufen derart zur Umfangsrichtung unter einem Winkel von 30° bis 45°, dass sie mit der jeweiligen Querrille 2 einen stumpfen Winkel einschließen und bezüglich der Umfangsrichtung gegensinnig zu den Schrägrillen 3 geneigt sind. Zumindest die Schrägrillen 3 und die innerhalb der Bodenaufstandsfläche befindlichen Abschnitte der schulterseitigen Querrillen 2 sind auf die Profiltiefe T ausgeführt (in Fig. 2 bis Fig. 4 angedeutet), welche für den vorgesehenen Reifentyp üblicherweise 6,5 mm bis 10,0 mm beträgt.

Die Profilblöcke 1' sind jeweils mit einer Anzahl von Einschnitten 5, beim gezeigten Ausführungsbeispiel mit drei bzw. vier Einschnitten 5, versehen, welche in Draufsicht - bezogen auf ihre in Erstreckungsrichtung ausgerichteten, kaum merkbar gebogen verlaufende Mittellinien m_{E} - parallel zueinander sowie parallel zu den Querrillen 2 verlaufen. Die Einschnitte 5 durchqueren die Profilblöcke 1' und münden laufstreifeninnenseitig in eine Schrägrille 3 bzw. eine Rille 4 ein und laufen laufstreifenaußenseitig an einer zur nicht gezeigten Seitenwand verlaufenden Schulterflanke 1" der Profilblöcke 1' aus.

Wie Fig. 2 bis Fig. 4 zeigen, weisen die Eischnitte 5 jeweils zwei einander gegenüberliegende Einschnittwände 6, einen Einschnittgrund 7, in radialer Richtung eine maximale Tiefe T₁ (Fig. 4) von 75% bis 100%, insbesondere von bis zu 90%, der Profiltiefe T auf, wobei die Einschnitte 5 in Richtung zur Schulterflanke 1" insbesondere in bekannter Weise seichter werden. Ferner weisen die Einschnitte 5 eine zwischen den Einschnittwänden 6 ermittelte, vorzugsweise zumindest weitgehend konstante Breite b₁ von 0,4 mm bis 1,0 mm, insbesondere bis zu 0,8 mm, auf, wobei die Breite b₁ dem Minimalabstand zwischen den beiden Einschnittwänden 6 entspricht.

Wie Fig. 1 ferner zeigt, erstrecken sich Einschnitte 5 entlang ihrer Mittellinien m_{E}, in Draufsicht betrachtet, jeweils über eine schulterseitige Einschnittzone 5a, eine mittlere Einschnittzone 5b und eine laufstreifeninnenseitige Einschnittzone 5c. Die schulterseitigen Einschnittzonen 5a schließen an einer in Umfangsrichtung umlaufenden Linie l₁ an die mittleren Einschnittzonen 5b an, wobei die Linie l₁ beim gezeigten Ausführungsbeispiel mit der bereits erwähnten, den seitlichen Rand der Bodenaufstandsfläche andeutenden Linie l zusammenfällt. Alternativ kann die Linie l₁ zur Linie l in axialer Richtung einen Abstand von bis zu 10,0 mm, insbesondere von bis zu 5,0 mm, aufweisen und daher innerhalb oder außerhalb der Bodenaufstandsfläche liegen, wobei sie bevorzugter Weise innerhalb der Bodenaufstandsfläche liegt.

Die laufstreifeninnenseitigen Einschnittzonen 5c schließen an die mittleren Einschnittzonen 5b an einer ein Umfangsrichtung umlaufenden Linie l₂ an, welche zur Linie l₁ in axialer Richtung einen Abstand a₁ von 10,0 mm bis 15,0 mm aufweist.

Die Einschnitte 5 "teilen" die bzw. verleihen der schulterseitigen Profilblockreihe 1 einen vom seitlichen Rand der Profilblockreihe 1 bis zur Linie l₁ reichenden, schulterseitigen Profilbockreihenabschnitt 1a, einen zwischen den Linien l₁ und l₂ liegenden, mittleren Profilblockreihenabschnitt 1b und einen einseitig an die Linie l₂ angrenzenden, laufstreifeninnenseitigen Profilblockreihenabschnitt 1c. Die Profilblockreihenabschnitte 1a, 1b, 1c entsprechen daher jeweils einen in Umfangsrichtung umlaufenden Abschnitt der Profilblockreihe 1. Die Gestaltung der beiden Einschnittwände 6 in jeder Eischnittzone 5a, 5b, 5c unterscheidet sich von Gestaltung der beiden Einschnittwände 6 in den jeweils beiden anderen Einschnittzonen 5a, 5b, 5c. Ferner unterscheidet sich die Tiefe des Einschnittes 5 in jeder Einschnittzone 5a, 5b, 5c von der Tiefe des Einschnittes 5 in den jeweils beiden anderen Einschnittzonen 5a, 5b, 5c. Die Gestaltung der Einschnittwände 6 und die Tiefe des Einschnittes 5 ist dabei derart, dass die laterale Steifigkeit der schulterseitigen Profilblockreihe 1 stufenweise über die Profilblockreihenabschnitte 1a - 1b - 1c abnimmt. Die laterale Steifigkeit nimmt also vom schulterseitigen Profilblockreihenabschnitt 1a zum mittleren Profilblockreihenabschnitt 1b sowie vom mittleren Profilblockreihenabschnitt 1b zum laufstreifeninnenseitigen Profilblockreihenabschnitt 1c ab.

Die weitere Ausgestaltung der Einschnittzonen 5a, 5b, 5c wird nachfolgend anhand eines einzelnen Einschnittes 5 erläutert.

Wie Fig. 1 in Kombination mit Fig. 2 zeigt, verläuft der Einschnitt 5 in der schulterseitigen Einschnittzone 5a beim gezeigten Ausführungsbeispiel in Draufsicht gerade und ist, im Querschnitt betrachtet, zickzackförmig ausgeführt, wobei er sich in radialer Richtung aus aneinander anschließenden Einschnittabschnitten Sa` zusammensetzt, welche jeweils gerade sowie zur radialen Richtung unter einem Winkel α von 15° bis 25° verlaufen. Die Einschnittabschnitte Sa` weisen in radialer Richtung jeweils eine Länge lₐ auf, welche vorzugsweise 0,7 mm bis 1,5 mm beträgt.

Gemäß Fig. 1 verläuft der Einschnitt 5 in der mittlere Einschnittzone 5b beim gezeigten Ausführungsbeispiel in Draufsicht sägezahnförmig und setzt sich in Draufsicht aus zwei parallel zueinander verlaufenden kürzeren Unterabschnitten 5b^{I} und zwei parallel zueinander verlaufenden, gegenüber den kürzeren Unterabschnitten 5b^{I} länger ausgeführten längeren Unterabschnitten 5b^{II} zusammen, wobei jeweils ein kürzerer Unterabschnitt 5b^{I} auf einen längeren Unterabschnitt 5b^{II} folgt und wobei ein kürzerer Unterabschnitt 5b^{I} an die schulterseitige Einschnittzone 5a anschließt. Die kürzeren Unterabschnitte 5b^{I} und die längeren Unterabschnitte 5b^{II} verlaufen relativ zur Mittellinie m_{E} jeweils unter einem Winkel β von bis zu 5°, insbesondere von bis zu 3°. Gemäß Fig. 3 setzt sich der Einschnitt 5 in der mittleren Einschnittzone 5b, im Querschnitt des Einschnittes 5 betrachtet, aus in radialer Richtung verlaufenden Einschnittabschnitten Sb` und quer zur radialen Richtung verlaufende Einschnittabschnitten 5b" zusammen, wobei derart abwechselnd ein Einschnittabschnitt Sb` auf einen Einschnittabschnitt 5b" folgt, dass drei eckige, liegend U-förmige Einschnittabschnitte 5b‴ gebildet sind, welche in radialer Richtung voneinander beabstandet sind und seitlich über die in radialer Richtung verlaufenden Einschnittabschnitte Sb` hinausragen.

Fig. 3a zeigt eine alternative Ausgestaltung der mittleren Einschnittzone 5b, wobei sie sich von jener der Fig. 3 dadurch unterscheidet, dass die liegend U-förmigen Einschnittabschnitte 5b‴ unmittelbar ineinander übergehen, sodass diese mäanderartig verlaufen.

Wie Fig. 1 ferner zeigt, verläuft der Einschnitt 5 in der laufstreifeninnenseitigen Einschnittzone 5c beim gezeigten Ausführungsbeispiel in Draufsicht zumindest über den Großteil seiner Erstreckung wellenförmig und weist einen in Draufsicht gerade verlaufenden Randabschnitt Sc` auf, welcher in eine der Schrägrillen 3 oder eine der Rillen 4 einmündet. Gemäß Fig. 4 sind im laufstreifeninnenseitigen Einschnittabschnitt 5c an den Einschnittwänden 6 lokale Vorsprünge 8 ausgebildet, welche jeweils in eine an der jeweils anderen Einschnittwand 6 ausgebildete, mit einem Vorsprung 8 korrespondierende Vertiefung 8` hineinragen. Der gezeigte Querschnitt ist daher lediglich als beispielhafter, lokaler Querschnitt zu verstehen, der Querschnitt des Einschnittes 5 ändert sich somit über die Erstreckung der laufstreifeninnenseitigen Einschnittzone 5c. Die Vorsprünge 8 weisen jeweils die Gestalt eines geraden Kreiskegels auf, wobei die Achse a des Kreiskegels senkrecht zur jeweiligen Einschnittwand 6 verläuft und die Grundfläche des Kreiskegels am Niveau der jeweiligen Einschnittwand 6 liegt. Jeder Vorsprung 8 weist gegenüber dem Niveau der Einschnittwand 6, von welcher er ausgeht, eine der Höhe des Kreiskegels entsprechende Stärke si von 100% bis 230%, insbesondere von zumindest 110%, besonders bevorzugt von zumindest 180%, der Breite b₁ des Einschnittes 5 sowie in radialer Richtung am Niveau der Einschnittwand 6 einen Durchmesser d₁ von 150% bis 300% der Breite b₁ des Einschnittes 5 auf. An jeder Einschnittwand 6 sind in der laufstreifeninnenseitigen Einschnittzone 5c vorzugsweise jeweils zwei bis zehn, insbesondere vier bis sieben, Vorsprünge 8 mit korrespondierender Vertiefung 8` ausgebildet. Ferner ist es bevorzugt, wenn Vorsprünge 8 mit korrespondierender Vertiefung 8` in zumindest zwei (in Fig. 4 drei) unterschiedlichen Tiefen vorgesehen sind.

Fig. 4a zeigt eine alternative Ausgestaltung der schulterseitigen Einschnittzone 5c, welche sich von jener der Fig. 4 dadurch unterscheidet, dass ein einziger, im Querschnitt kreissegmentförmiger Vorsprung 9 mit korrespondierenden Vertiefung 9' vorgesehen ist. Bevorzugter Weise erstreckt sich der Vorsprung 9 über die gesamte Einschnittzone 5c, kann jedoch auch kugelsegmentförmige ausgeführt sein.

Wie Fig. 2 bis Fig. 4 ferner zeigen, ist beim gezeigten Ausführungsbeispiel die Tiefe des Einschnittes 5 in den Einschnittzonen 5a, 5b, 5c jeweils konstant, wobei die Tiefe schrittweise über die Einschnittzonen 5c - 5b - 5a abnimmt. Die größte Tiefe des Einschnittes 5 in der Einschnittzone 5c ist um mindestens 1,5 mm geringer als die Profiltiefe, die größte Tiefe des Einschnittes 5 in der Einschnittzone 5b ist um mindestens 1,5 mm geringer als jene in der Einschnittzone 5c und die größte Tiefe des Einschnittes 5 in der Einschnittzone 5a ist um mindestens 2,0 mm geringer als jene in der Einschnittzone 5b.

Die Erfindung ist auf die beschriebenen Ausführungsvarianten nicht beschränkt. Der Schutzumfang der Erfindung wird durch den unabhängigen Patentanspruch 1 definiert.

Die Einschnittzonen 5a, 5b, 5c können eine von der beschriebenen Querschnittgeometrie abweichende Querschnittgeometrie aufweisen.

### Bezugsziffernliste

- 1: schulterseitiger Profilblockreihe
- 1a: schulterseitiger Profilblockreihenabschnitt
- 1b: mittlerer Profilblockreihenabschnitt
- 1c: laufstreifeninnseitiger Profilblockreihenabschnitt
- 1': schulterseitiger Profilblock
- 1": Schulterflanke
- 2: schulterseitige Querrille
- 3: Schrägrille
- 4: Rille
- 5: Einschnitt
- 5a: schulterseitige Einschnittzone
- 5a': Einschnittabschnitt
- 5b: mittlerer Einschnittzone
- 5b^{I}, 5b^{II}: Unterabschnitt
- 5b', 5b", 5b‴: Einschnittabschnitt
- 5c: laufstreifeninnenseitige Einschnittzone
- 5c': Randabschnitt
- 6: Einschnittwand
- 7: Einschnittgrund
- 8: Vorsprung
- 8': Vertiefung
- 9: Vorsprung
- 9': Vertiefung
- a: Achse
- a₁: Abstand
- b₁: Breite
- d₁: Durchmesser
- 1: Linie (seitlicher Rand der Bodenaufstandsfläche)
- l₁, l₂: Linie
- lₐ: Länge
- m_{E}: Mittellinie
- s₁: Stärke
- T₁: Tiefe
- T: Profiltiefe
- α, β: Winkel

## Patentansprüche

1. Fahrzeugluftreifen mit einem Laufstreifen mit zumindest einer schulterseitigen Profilblockreihe (1) mit Profilblöcken (1'), welche durch parallel zueinander verlaufende Querrillen (2) getrennt und mit sich insbesondere parallel zu den Querrillen (2) erstreckenden, Einschnittwände (6) aufweisenden Einschnitten (5) versehen sind, wobei die Einschnitte (5), in Draufsicht betrachtet, über drei Einschnittzonen (5a, 5b, 5c) verlaufen, von welchen eine einem zumindest Großteils außerhalb der Bodenaufstandsfläche befindlichen schulterseitigen, eine einem mittleren und eine einem laufstreifeninnenseitigen, in Umfangsrichtung umlaufenden Profilblockreihenabschnitt (1a, 1b, 1c) der Profilblockreihe (1) zugeordnet ist, wobei die Tiefe der Einschnitte (5) und die Gestaltung der Einschnittwände (6) in jeder Einschnittzone (5a, 5b, 5c) von der Tiefe der Einschnitte (5) und der Gestaltung der Einschnittwände (6) in den beiden anderen Einschnittzonen (5a, 5b, 5c) abweicht, derart, dass die laterale Steifigkeit der schulterseitigen Profilblockreihe (1) vom schulterseitigen Profilblockreihenabschnitt (1a) zum laufstreifeninnenseitigen Profilblockreihenabschnitt (1c) abnimmt,
**dadurch gekennzeichnet,**
**dass** die Einschnitte (5) in der dem laufstreifeninnenseitigen Profilblockreihenabschnitt (1c) zugeordneten Einschnittzone (5c) in Draufsicht zumindest abschnittsweise wellenförmig, in der dem mittleren Profilblockreihenabschnitt (1b) zugeordneten Einschnittzone (5b) in Draufsicht zickzackförmig, insbesondere sägezahnförmig, und in der dem schulterseitigen Profilblockreihenabschnitt (1a) zugeordneten Einschnittzone (5a) in Draufsicht gerade verlaufen, wobei die Einschnitte (5) in den Einschnittzonen (5a, 5b, 5c) eine größte Tiefe aufweisen, welche vom laufstreifeninnenseitigen Profilblockreihenabschnitt (1c) über den mittleren Profilblockreihenabschnitt (1b) zum schulterseitigen Profilblockreihenabschnitt (1a) schrittweise abnimmt.

2. Fahrzeugluftreifen nach Anspruch 1, **dadurch gekennzeichnet, dass** der schulterseitige Profilblockreihenabschnitt (1a) und der mittlere Profilblockreihenabschnitt (1b) an einer in Umfangsrichtung umlaufenden Linie (l₁) aneinander anschließen, welche sich in axialer Richtung innerhalb eines Abstandes von bis zu 5,0 mm vom seitlichen Rand (l) der Bodenaufstandsfläche befindet, wobei die Linie (l₁) vorzugsweise innerhalb der Bodenaufstandsfläche liegt.

3. Fahrzeugluftreifen nach Anspruch 2, **dadurch gekennzeichnet, dass** der laufstreifeninnenseitige Profilblockreihenabschnitt (1c) und der mittlere Profilblockreihenabschnitt (1b) an einer in Umfangsrichtung umlaufenden Linie (l₂) aneinander anschließen, welche zur Linie (l₁), an welcher der schulterseitige Profilblockreihenabschnitt (1a) und der mittlere Profilblockreihenabschnitt (1b) aneinander anschließen, in axialer Richtung einen Abstand (a₁) von 10,0 mm bis 15,0 mm aufweist.

4. Fahrzeugluftreifen nach einem der Ansprüche 1 bis 3, **dadurch gekennzeichnet, dass** die größte Tiefe der Einschnitte (5), ermittelt in der jeweiligen Einschnittzone (5a, 5b, 5c), im laufstreifeninnenseitigen Profilblockreihenabschnitt (1c) um mindestens 1,5 mm geringer ist als die Profiltiefe, vom laufstreifeninnenseitigen Profilblockreihenabschnitt (1c) zum mittleren Profilblockreihenabschnitt (1b) um mindestens 1,5 mm und vom mittleren Profilblockreihenabschnitt (1b) zum schulterseitigen Profilblockreihenabschnitt (1a) um mindestens 2,0 abnimmt.

5. Fahrzeugluftreifen nach einem der Ansprüche 1 bis 4, **dadurch gekennzeichnet, dass** die Einschnitte (5) in der dem laufstreifeninnenseitigen Profilblockreihenabschnitt (1c) zugeordneten Einschnittzone (5c) an zumindest einer, insbesondere jeweils an einer einzigen, Einschnittwand (6) zumindest einen, insbesondere genau einen, Vorsprung (8, 9) aufweisen, welchem an der anderen Einschnittwand (6) eine mit dem Vorsprung (8, 9) korrespondierend ausgebildete Vertiefung (8', 9') gegenüberliegt.

6. Fahrzeugluftreifen nach Anspruch 5, **dadurch gekennzeichnet, dass** der Vorsprung (8, 9) bzw. die Vorsprünge (8, 9) gegenüber dem Niveau der jeweiligen Einschnittwand (6) eine Stärke (s₁) von 100% bis 230%, insbesondere von zumindest 110%, besonders bevorzugt von zumindest 180%, der Breite (b₁) des Einschnittes (5) aufweist bzw. aufweisen.

7. Fahrzeugluftreifen nach Anspruch 5 oder 6, **dadurch gekennzeichnet, dass** der Vorsprung (9) bzw. die Vorsprünge (9), im Querschnitt des Einschnittes (5) betrachtet, kreissegmentförmig sind.

8. Fahrzeugluftreifen nach Anspruch 5 oder 6, **dadurch gekennzeichnet, dass** der Vorsprung (9) bzw. die Vorsprünge (9) die Form eines Kreiskegels oder eines Kugelsegments aufweist bzw. aufweisen.

9. Fahrzeugluftreifen nach einem der Ansprüche 5 bis 8, **dadurch gekennzeichnet, dass** an den Einschnittwänden (6) eine Vielzahl von Vorsprüngen (8, 9) mit zugehörigen korrespondieren Vertiefungen (8', 9') an der jeweils anderen Einschnittwand (6) vorgesehen ist, wobei die Vorsprünge (8, 9) insbesondere in zumindest zwei, vorzugsweise zumindest drei unterschiedlichen Tiefen vorgesehen sind.

10. Fahrzeugluftreifen nach einem der Ansprüche 1 bis 9, **dadurch gekennzeichnet, dass** sich die Einschnitte (5) in der dem mittleren Profilblockreihenabschnitt (1b) zugeordneten Einschnittzone (5b), im Querschnitt betrachtet, abwechselnd aus in radialer Richtung verlaufenden Einschnittabschnitten (5b') und quer zu diesen verlaufenden Einschnittabschnitten (5b") zusammensetzen.

11. Fahrzeugluftreifen nach einem der Ansprüche 1 bis 10, **dadurch gekennzeichnet, dass** die Einschnitte (5) in der dem schulterseitigen
Profilblockreihenabschnitt (1a) zugeordneten Einschnittzone (5a), im Querschnitt betrachtet, in radialer Richtung zickzackförmig verlaufen und sich aus insbesondere vier bis sechs Einschnittabschnitten (5a') zusammensetzen, welche zur radialen Richtung unter einem Winkel (α) von vorzugsweise 15° bis 25° verlaufen.

## Claims

1. Pneumatic vehicle tyre having a tread with at least one shoulder-side profile-block row (1) with profile blocks (1') which are separated by transverse channels (2) extending parallel to one another and which are provided with sipes (5), having sipe walls (6), which extend in particular parallel to the transverse channels (2), wherein the sipes (5), as seen in plan view, extend over three sipe zones (5a, 5b, 5c), of which one is assigned to a shoulder-side, one is assigned to a middle, and one is assigned to a tread-inner-side, circumferentially encircling profile-block-row portion (1a, 1b, 1c) of the profile-block row (1), said shoulder-side circumferentially encircling profile-block-row portion being situated at least for the most part outside the ground contact area, wherein the depth of the sipes (5) and the design of the sipe walls (6) in each sipe zone (5a, 5b, 5c) differs from the depth of the sipes (5) and the design of the sipe walls (6) in the two other sipe zones (5a, 5b, 5c) in such a way that the lateral stiffness of the shoulder-side profile-block row (1) decreases from the shoulder-side profile-block-row portion (1a) to the tread-inner-side profile-block-row portion (1c),
**characterized**
**in that** the sipes (5) in the sipe zone (5c) assigned to the tread-inner-side profile-block-row portion (1c) at least sectionally extend in an undulating manner in plan view, in the sipe zone (5b) assigned to the middle profile-block-row portion (1b) extend in a zigzag-shaped, in particular sawtooth-like, manner in plan view, and in the sipe zone (5a) assigned to the shoulder-side profile-block-row portion (1a) extend in a straight manner in plan view, wherein the sipes (5) in the sipe zones (5a, 5b, 5c) have a greatest depth which decreases in a stepwise manner from the tread-inner-side profile-block-row portion (1c) to the shoulder-side profile-block-row portion (1a) via the middle profile-block-row portion (1b).

2. Pneumatic vehicle tyre according to Claim 1, **characterized in that** the shoulder-side profile-block-row portion (1a) and the middle profile-block-row portion (1b) adjoin one another at a circumferentially encircling line (l₁) which is situated axially within a distance of up to 5.0 mm from the lateral edge (I) of the ground contact area, wherein the line (l₁) preferably lies within the ground contact area.

3. Pneumatic vehicle tyre according to Claim 2, **characterized in that** the tread-inner-side profile-block-row portion (1c) and the middle profile-block-row portion (1b) adjoin one another at a circumferentially encircling line (I₂) which is axially at a distance (a₁) of 10.0 mm to 15.0 mm from the line (l₁) at which the shoulder-side profile-block-row portion (1a) and the middle profile-block-row portion (1b) adjoin one another.

4. Pneumatic vehicle tyre according to one of Claims 1 to 3, **characterized in that** the greatest depth of the sipes (5), determined in the respective sipe zone (5a, 5b, 5c), is less than the profile depth by at least 1.5 mm in the tread-inner-side profile-block-row portion (1c), decreases by at least 1.5 mm from the tread-inner-side profile-block-row portion (1c) to the middle profile-block-row portion (1b), and decreases by at least 2.0 mm from the middle profile-block-row portion (1b) to the shoulder-side profile-block-row portion (1a).

5. Pneumatic vehicle tyre according to one of Claims 1 to 4, **characterized in that** the sipes (5) in the sipe zone (5c) assigned to the tread-inner-side profile-block-row portion (1c) have at at least one, in particular in each case at a single, sipe wall (6) at least one, in particular exactly one, projection (8, 9) opposite which, on the other sipe wall (6), there is situated a depression (8', 9') which is formed so as to correspond to the projection (8, 9).

6. Pneumatic vehicle tyre according to Claim 5, **characterized in that**, in relation to the level of the respective sipe wall (6), the projection (8, 9) has or the projections (8, 9) have a thickness (s₁) of 100% to 230%, in particular of at least 110%, particularly preferably of at least 180%, of the width (b₁) of the sipe (5).

7. Pneumatic vehicle tyre according to Claim 5 or 6, **characterized in that**, as seen in a cross section of the sipe (5), the projection (9) has or the projections (9) have the shape of a circular segment.

8. Pneumatic vehicle tyre according to Claim 5 or 6, **characterized in that** the projection (9) has or the projections (9) have the shape of a circular cone or of a spherical cap.

9. Pneumatic vehicle tyre according to one of Claims 5 to 8, **characterized in that** provision is made on the sipe walls (6) of a multiplicity of projections (8, 9) with associated corresponding depressions (8', 9') on the in each case other sipe wall (6), wherein the projections (8, 9) are provided in particular at at least two, preferably at least three, different depths.

10. Pneumatic vehicle tyre according to one of Claims 1 to 9, **characterized in that** the sipes (5) in the sipe zone (5b) assigned to the middle profile-block-row portion (1b), as seen in cross section, are alternately made up of radially extending sipe portions (5b') and sipe portions (5b") extending transversely thereto.

11. Pneumatic vehicle tyre according to one of Claims 1 to 10, **characterized in that** the sipes (5) in the sipe zone (5a) assigned to the shoulder-side profile-block-row portion (1a), as seen in cross section, extend in a zigzag-shaped manner in a radial direction and are made up of in particular four to six sipe portions (5a') which extend at an angle (α) of preferably 15° to 25° to the radial direction.

## Revendications

1. Pneumatique de véhicule avec une bande de roulement avec au moins une rangée de blocs profilés côté épaulement (1) avec des blocs profilés (1'), qui sont séparés par des rainures transversales (2) s'étendant parallèlement les unes aux autres et qui sont munis d'entailles (5) s'étendant notamment parallèlement aux rainures transversales (2), présentant des parois d'entaille (6), les entailles (5), considérées en vue de dessus, s'étendant sur trois zones d'entaille (5a, 5b, 5c), dont une est associée à une section de rangée de blocs profilés côté épaulement, se trouvant au moins en grande partie à l'extérieur de la surface de contact avec le sol, une à une section de rangée de blocs profilés centrale et une à une section de rangée de blocs profilés côté intérieur de la bande de roulement (1a, 1b, 1c), qui s'étend tout autour dans la direction périphérique, de la rangée de blocs profilés (1), la profondeur des entailles (5) et la configuration des parois d'entaille (6) dans chaque zone d'entaille (5a, 5b, 5c) différant de la profondeur des entailles (5) et de la configuration des parois d'entaille (6) dans les deux autres zones d'entaille (5a, 5b, 5c), de telle sorte que la rigidité latérale de la rangée de blocs profilés côté épaulement (1) diminue de la section de rangée de blocs profilés côté épaulement (1a) à la section de rangée de blocs profilés côté intérieur de la bande de roulement (1c),
**caractérisé en ce que**
les entailles (5) s'étendent dans la zone d'entaille (5c) associée à la section de rangée de blocs profilés côté intérieur de la bande de roulement (1c) au moins par sections sous forme ondulée en vue de dessus, dans la zone d'entaille (5b) associée à la section de rangée de blocs profilés centrale (1b) sous forme de zigzag en vue de dessus, notamment sous forme de dents de scie, et dans la zone d'entaille (5a) associée à la section de rangée de blocs profilés côté épaulement (1a) sous forme droite en vue de dessus, les entailles (5) dans les zones d'entaille (5a, 5b, 5c) présentant une profondeur maximale qui diminue progressivement de la section de rangée de blocs profilés côté intérieur de la bande de roulement (1c) à la section de rangée de blocs profilés côté épaulement (1a) en passant par la section de rangée de blocs profilés centrale (1b).

2. Pneumatique de véhicule selon la revendication 1, **caractérisé en ce que** la section de rangée de blocs profilés côté épaulement (1a) et la section de rangée de blocs profilés centrale (1b) se raccordent l'une à l'autre au niveau d'une ligne (l₁) qui s'étend tout autour dans la direction circonférentielle, qui se trouve, dans la direction axiale, à l'intérieur d'une distance de jusqu'à 5,0 mm du bord latéral (l) de la surface de contact avec le sol, la ligne (l₁) se situant de préférence à l'intérieur de la surface de contact avec le sol.

3. Pneumatique de véhicule selon la revendication 2, **caractérisé en ce que** la section de rangée de blocs profilés côté intérieur de la bande de roulement (1c) et la section de rangée de blocs profilés centrale (1b) se raccordent l'une à l'autre au niveau d'une ligne (l₂) qui s'étend tout atour dans la direction circonférentielle, qui présente une distance (a₁) de 10,0 mm à 15,0 mm dans la direction axiale par rapport à la ligne (l₁) au niveau de laquelle la section de rangée de blocs profilés côté épaulement (1a) et la section de rangée de blocs profilés centrale (1b) se raccordent l'une à l'autre.

4. Pneumatique de véhicule selon l'une quelconque des revendications 1 à 3, **caractérisé en ce que** la profondeur maximale des entailles (5), déterminée dans la zone d'entaille respective (5a, 5b, 5c), est inférieure d'au moins 1,5 mm à la profondeur de profil dans la section de rangée de blocs profilés côté intérieur de la bande de roulement (1c), diminue d'au moins 1,5 mm de la section de rangée de blocs profilés côté intérieur de la bande de roulement (1c) à la section de rangée de blocs profilés centrale (1b) et d'au moins 2,0 de la section de rangée de blocs profilés centrale (1b) à la section de rangée de blocs profilés côté épaulement (1a).

5. Pneumatique de véhicule selon l'une quelconque des revendications 1 à 4, **caractérisé en ce que** les entailles (5) dans la zone d'entaille (5c) associée à la section de rangée de blocs profilés côté intérieur de la bande de roulement (1c) présentent sur au moins une, notamment respectivement sur une seule, paroi d'entaille (6) au moins une, notamment exactement une, saillie (8, 9), qui est opposée, sur l'autre paroi d'entaille (6), à un creux (8', 9') réalisé en correspondance avec la saillie (8, 9).

6. Pneumatique de véhicule selon la revendication 5, **caractérisé en ce que** la saillie (8, 9) ou les saillies (8, 9) présente(nt) par rapport au niveau de la paroi d'entaille (6) respective une épaisseur (s₁) de 100 % à 230 %, notamment d'au moins 110 %, de manière particulièrement préférée d'au moins 180 %, de la largeur (b₁) de l'entaille (5).

7. Pneumatique de véhicule selon la revendication 5 ou 6, **caractérisé en ce que** la saillie (9) ou les saillies (9), considérées dans la coupe transversale de l'entaille (5), sont en forme de segment de cercle.

8. Pneumatique de véhicule selon la revendication 5 ou 6, **caractérisé en ce que** la saillie (9) ou les saillies (9) présente(nt) la forme d'un cône circulaire ou d'un segment de sphère.

9. Pneumatique de véhicule selon l'une quelconque des revendications 5 à 8, **caractérisé en ce qu'**il est prévu sur les parois d'entaille (6) une pluralité de saillies (8, 9) avec des creux correspondants associés (8', 9') sur l'autre paroi d'entaille respective (6), les saillies (8, 9) étant prévues notamment à au moins deux, de préférence à au moins trois profondeurs différentes.

10. Pneumatique de véhicule selon l'une quelconque des revendications 1 à 9, **caractérisé en ce que** les entailles (5) dans la zone d'entaille (5b) associée à la section de rangée de blocs profilés centrale (1b), considérées dans la coupe transversale, se composent alternativement de sections d'entaille (5b') s'étendant en direction radiale et de sections d'entaille (5b") s'étendant transversalement à celles-ci.

11. Pneumatique de véhicule selon l'une quelconque des revendications 1 à 10, **caractérisé en ce que** les entailles (5) dans la zone d'entaille (5a) associée à la section de rangée de blocs profilés côté épaulement (1a) s'étendent, considérées dans la coupe transversale, sous forme de zigzag dans la direction radiale et se composent notamment de quatre à six sections d'entaille (5a') qui s'étendent par rapport à la direction radiale selon un angle (α) de préférence de 15° à 25°.
